# EUROPÄISCHE PATENTSCHRIFT

(11) **EP 1 518 604 B1**
(45) Veröffentlichungstag und Bekanntmachung des Hinweises auf die Patenterteilung: **13.06.2018**
(21) Anmeldenummer: 04021864.6
(22) Anmeldetag: 15.09.2004
(51) Int. Cl.: B01L 3/00, F16K 99/00

(54) **Mikrostrukturierte Vorrichtung zum entnehmbaren Speichern von kleinen Flüssigkeitsmengen und Verfahren zum Entnehmen der in dieser Vorrichtung gespeicherten Flüssigkeit**
Microstructure device for storing small amounts of liquid and method for collecting liquid stored in this device
Dispositif à microstructure pour stockage de petites quantités de liquide et procédé de prélevement du liquide stocké dans ce dispositif

(30) Priorität: 24.09.2003 DE 10344229
(43) Veröffentlichungstag der Anmeldung: 30.03.2005
(73) Patentinhaber: Boehringer Ingelheim microParts GmbH, 44227 Dortmund (DE)
(72) Erfinder: Kadel, Klaus, Dr., 58453 Witten (DE); Blankenstein, Gert, Dr., 44139 Dortmund (DE)
(74) Vertreter: Graefe, Jörg

(56) Entgegenhaltungen:
- EP-A- 0 279 574
- WO-A-86/06488
- WO-A-03/049860
- US-A- 2 251 501
- US-A- 5 710 041
- US-A1- 2002 137 199
- US-A1- 2003 127 152
- US-B1- 6 495 373

## Beschreibung

Die vorliegende Erfindung betrifft eine mikrostrukturierte Vorrichtung zum entnehmbaren Speichern von kleinen Flüssigkeitsmengen und ein Verfahren zum Entnehmen der in dieser Vorrichtung gespeicherten Flüssigkeit.

Aus dem Stand der Technik sind mikrostrukturierte Vorrichtungen bekannt, die einen plattenförmigen Träger aufweisen, in den einseitige Ausnehmungen eingebracht sind. Diese Ausnehmungen sind über Kanäle mit Entnahmekammern verbunden, über welche eine Flüssigkeit aus der Vorrichtung entnommen werden kann. Die Ausnehmung steht außerdem über einen Zulaufkanal in Verbindung mit einer Einlasskammer, über welche eine Probe oder eine Spülflüssigkeit in die Vorrichtung gegeben werden kann. Die Probe wird dann auf Grund von Transportkräften z.B. auf Grund von Kapillarkräften oder Druckkräften zu der Ausnehmung transportiert und gelangt von dort aus über den Entnahmekanal zu der Entnahmeöffnung. In die zunächst offene Ausnehmung werden sogenannte Container eingesetzt. Bei diesen Containern handelt es sich um Kunststoffbehältnisse, in welchen z.B. Reagenzflüssigkeiten eingebracht sind. Mittels eines spitzen Gegenstandes wird der Container so geöffnet, dass die in dem Behälter befindliche Flüssigkeit aus dem Container austreten kann, um sich mit der über den Zulaufkanal in die Ausnehmung zugeführte Flüssigkeit zu vermischen. Die aus dem Stand der Technik bekannten Container sind vereinheitlicht und sie können in verschiedene Träger von mikrostrukturierten Vorrichtungen eingesetzt werden. Die Träger weisen in der Regel mehrere Ausnehmungen auf, in welche dann verschiedene Container mit oftmals verschiedenen Reagenzflüssigkeiten eingesetzt werden können.

Der Nachteil bei der Verwendung von Containern für mikrostrukturierte Vorrichtungen zum entnehmbaren Speichern von Flüssigkeiten ist, dass das Design der Vorrichtung durch die Form der Container stark vorgegeben ist. Die Container machen es erforderlich, dass in dem Träger an die Container angepasste Ausnehmungen vorgesehen sind. Die Ausnehmungen können daher nicht individuell für jeden Träger gestaltet werden, was z.B. zu einer höheren Packungsdichte der zu speichernden Flüssigkeiten führen könnte. Ein weiterer Nachteil ist, dass zunächst ein relativ großer Aufwand getrieben wird, die Flüssigkeiten in die Container zu bringen, um dann die Container als solche in den Träger einzusetzen. Auch dies könnte man vereinfachen, in dem man die Flüssigkeiten unmittelbar in dem Träger speichert.

Aus dem Dokument US 6 495 373 B1 ist eine Vorrichtung mit den Merkmalen des Oberbegriffs bekannt. Mit dieser ist es möglich, eine Flüssigkeit unmittelbar in einem ersten Abschnitt eines Hohlraums zu speichern, ohne dass dazu besondere Container verwendet werden müssen. Zum Entnehmen der Flüssigkeit aus dem ersten Abschnitt weist die Vorrichtung ein Mittel zur Übertragung einer Kraft von dem Deckelelement zu dem Sperrelement auf. Mit dieser Kraft kann eine Verbindung zwischen dem Sperrelement und dem Träger so zerstört oder das Sperrelement so zerstört werden, dass die Flüssigkeitsmenge aus dem ersten Abschnitt des Hohlraums entnommen werden kann. Wird eine Kraft zum Zerstören der Verbindung zwischen dem Sperrelement und dem Träger oder zum Zerstören des Sperrelements auf das Deckelelement ausgeübt, die dass Deckelelement nicht zerstört, oder wird das Deckelelement an zumindest einer Sollbruchstelle zerstört, wird diese als minimale Kraft zum Zerstören der Verbindung zwischen dem Sperrelement und dem Träger oder zum Zerstören des Sperrelements bezeichnet.

Ein Nachteil der in dem Dokument US 6 495 373 B1 offenbarten Vorrichtung ist, dass nach einem Wegfall der minimalen Kraft die Gefahr besteht, dass das Sperrelement in eine Lage gerät, in welcher es die gerade freigegebene Öffnung verschließt. Dieses gilt es zu verhindern, um einen ungehinderten Austritt der Flüssigkeit aus dem ersten Abschnitt zu ermöglichen.
Der Erfindung liegt daher die Aufgabe zu Grunde, eine mikrostrukturierte Vorrichtung zum entnehmbaren Speichern von kleinen Flüssigkeitsmengen vorzuschlagen, bei welcher ein Verschließen der Öffnung des ersten Abschnitts durch das Sperrelement nach Wegfall der minimalen Kraft verhindert wird. Diese Aufgabe wird erfindungsgemäß durch eine mikrostrukturierte Vorrichtung gemäß Anspruch 1 gelöst. Eine derartige mikrostrukturierte Vorrichtung kann für ein Verfahren gemäß Anspruch 22 verwendet werden.

Eine mikrostrukturierte Vorrichtung zum entnehmbaren Speichern von kleinen Flüssigkeitsmengen umfasst dabei einen Träger, wobei in dem Träger ein Hohlraum mit zumindest einem ersten Abschnitt zum Speichern der kleinen Flüssigkeitsmenge vorgesehen ist. Der erste Abschnitt des Hohlraums ist in den Träger als Ausnehmung eingeformt. Dieser erste Abschnitt ist mit einem Deckelelement und einem Sperrelement verschlossen und wird außerdem vorteilhaft durch seitliche Wandungen, die von dem Träger gebildet werden, begrenzt. Die erfindungsgemäße Vorrichtung weist ein Mittel zur Übertragung einer Kraft von dem Deckelelement zu dem Sperrelement auf. Mittels dieser Kraft ist eine stoffschlüssige Verbindung zwischen dem Sperrelement und dem Träger zerstörbar oder das Sperrelement selbst zerstörbar, so dass die Flüssigkeitsmenge aus dem ersten Abschnitt des Hohlraums entnehmbar ist.

Die Flüssigkeitsmenge wird bei einer erfindungsgemäßen Vorrichtung somit nicht wie bei einigen Vorrichtungen gemäß dem Stand der Technik in einem besonderen Container gespeichert. Vielmehr wird die Flüssigkeitsmenge unmittelbar in der Vorrichtung in einem Hohlraum gespeichert, der einerseits von dem Deckelelement und dem Sperrelement sowie seitliche Wandungen, die durch den Träger gebildet werden, begrenzt. Durch eine Zerstörung des Sperrelementes oder der Verbindung zwischen Sperrelement und Träger oder einer Verschiebung des Sperrelements kann eine Öffnung freigegeben werden, über welche die in dem Hohlraum gespeicherte Flüssigkeit aus dem Hohlraum entnommen werden kann.

Bei einer vorteilhaft ausgestalteten mikrostrukturierten Vorrichtung ist der Träger einstückig. Das bedeutet, dass der erste Hohlraum in einem aus einem Stück bestehenden Träger eingeformt ist. Im Gegensatz zu einem aus mehreren Teilen hergestellten Träger oder einer mikrostrukturierten Vorrichtung, bei der der erste Hohlraum nicht Teil des Trägers ist beziehungsweise nicht in den Träger eingeformt ist, wird durch die Einstückigkeit des Trägers eine kompakte und einfache Bauweise erreicht. Diese Konstruktion hat insbesondere bei der Produktion der mikrostrukturierten Vorrichtung Vorteile.

Gemäß der Erfindung sind das Sperrelement und der Träger einstückig miteinander verbunden.

Erfindungsgemäß weist die Verbindung zwischen dem Träger und dem Sperrelement oder das Sperrelement selbst eine Sollbruchstelle auf, an welcher eine Zerstörung des Sperrelements bzw. der Bindung zwischen Sperrelement und Träger einfach möglich ist.

Es ist möglich, dass mittels der Kraft, die auf das Deckelelement ausgeübt wird, das Sperrelement gegenüber dem Träger in eine Freigabeposition verschiebbar ist, in welcher die Flüssigkeit aus dem ersten Hohlraum entnehmbar ist.

Das Deckelelement kann gemäß der Erfindung eine Membrane, eine Folie oder eine (mikro-)strukturierte Platte sein.

Das Deckelelement kann durch Laminieren, Siegeln oder Kleben mit dem Träger verbunden sein. Ebenfalls ist es möglich, dass das Deckelelement metallisiert ist.

Das Deckelelement einer erfindungsgemäßen Vorrichtung kann so ausgestaltet sein, dass beim Ausüben der Kraft zum Zerstören der Verbindung zwischen dem Sperrelement und dem Träger oder zum Zerstören des Sperrelements das Deckelelement selbst unzerstörbar ist. Um insbesondere in den Fällen, in denen das Deckelelement unzerstörbar ist, das Austreten der Flüssigkeit aus dem ersten Abschnitt des Hohlraums zu erleichtern, kann eine erfindungsgemäße Vorrichtung so eingerichtet sein, dass es Elemente zum Festhalten des Deckelelements umfasst, mit welchem beim Ausüben der minimalen Kraft das Deckelelement in einer ausgelenkten Stellung gehalten werden kann. Dadurch ist es möglich, auch nach einem Wegfall der minimalen (äußeren) Kraft das Deckelement in der ausgelenkten Stellung zu halten und damit auch den Druck innerhalb des ersten Abschnitts des Hohlraums aufrecht zu halten.

Ebenso ist es möglich, dass das Deckelelement einer erfindungsgemäßen Vorrichtung so ausgestaltet ist, dass bei Ausüben der minimalen Kraft zum Zerstören der Verbindung zwischen dem Sperrelement und dem Träger oder zum Zerstören des Sperrelements das Deckelelement zumindest an einer Sollbruchstelle zerstörbar ist. Die Sollbruchstelle im Deckelelement kann dabei in einem Bereich des Deckelelements einfassen, der kleiner ist als ein von der Sollbruchstelle zwischen dem Träger und dem Sperrelement eingefasster Bereich. Dadurch ist es möglich, dass das Deckelelement, beziehungsweise der aus dem Deckelelement von der Sollbruchstelle eingefasste Bereich des Deckelelements durch eine von dem Sperrelement freigegebene Öffnung hindurchgedrückt werden kann.

Eine erfindungsgemäße Vorrichtung kann ein Mittel zum Zerstören des Deckelelements umfassen, mit welchem beim Ausüben der minimalen Kraft das Deckelelement zerstörbar ist. Ist das Deckelelement zerstört, kann der erste Abschnitt des Hohlraums belüftet werden, wodurch der Austritt der Flüssigkeit aus dem ersten Abschnitt des Hohlraums erleichtert wird.

Eine erfindungsgemäße Vorrichtung umfasst Elemente zum Festhalten des Sperrelements, mit welchen nach dem Ausüben der minimalen Kraft das Sperrelement in einer ausgelenkten Stellung gehalten werden kann, um ein erneutes Verschließen der von dem Sperrelement freigegebenen Öffnung durch das Sperrelement zu verhindern. Ist die von dem Sperrelement freigegebene Öffnung dauerhaft geöffnet, kann die in dem ersten Abschnitt des Hohlraums gespeicherte Flüssigkeit auch nach Wegfall der minimalen Kraft erleichtert aus dem ersten Abschnitt austreten. Als Element zum Festhalten des Sperrelements weist das Sperrelement eine Rastnase auf, die in der ausgelenkten Stellung des Sperrelements an einem Vorsprung oder Ähnlichem des Trägers einrastet.

Das Mittel zur Kraftübertragung umfasst einen Stößel, der an dem Sperrelement angebracht ist.

Der Stößel, der als Mittel zur Kraftübertragung an einer erfindungsgemäßen Vorrichtung vorgesehen ist, ist nicht in der Mitte des Hohlraums zwischen dem Deckelelement und dem Sperrelement angeordnet , sondern näher zu einer der Wandungen des ersten Abschnitts des Hohlraums angeordnet. Die dann über den Stößel ausgeübte Kraft greift somit nicht im Zentrum des Sperrelements an. Dieses führt dazu, dass das Sperrelement bevorzugt in dem Bereich zerstört wird oder die Verbindung zwischen dem Sperrelement und dem Träger in dem Bereich zerstört wird, in dem der Stößel angeordnet ist.

Die Sollbruchstelle zwischen dem Sperrelement und dem Träger kann den Befestigungsbereich des Stößels am Sperrelement mit Ausnahme eines sogenannten Scharnierbereichs umschließen. Dadurch ist es möglich, dass das Sperrelement durch die minimale Kraft nicht vollständig aus der Verbindung zum Träger herausgelöst wird, sondern über den Scharnierbereich fest mit dem Träger verbunden bleibt. Das Sperrelement ist damit gewissermaßen gelenkig an dem Träger gelagert. In Kombination mit einem Element zum Festhalten des Sperrelements ist dann das gelenkig an dem Träger gelagerte Sperrelement in der geöffneten Stellung zum Träger fixiert. Der Scharnierbereich ist vorteilhaft der Bereich, in dem der Stößel den größtmöglichen Abstand zu einer Wandung des ersten Abschnitts des Hohlraums des Trägers hat. Gegenüberliegend diesem Scharnierbereich kann dann als Element zum Festhalten des Sperrelements die Rastnase an dem Sperrelement vorgesehen sein.

Eine erfindungsgemäße Vorrichtung kann auf der dem ersten Abschnitt des Hohlraums abgewandten Seite des Sperrelementes einen auf das Sperrelement gerichteten Dorn umfassen.

Durch eine Bewegung des Sperrelementes auf Grund der Krafteinwirkung in Richtung der Spitze dieses Dornes kann dann das Sperrelement zerstört werden, damit die Flüssigkeit aus dem ersten Hohlraum bzw. dem ersten Abschnitt des Hohlraums entnehmbar ist.

Gemäß der Erfindung kann der erste Abschnitt des Hohlraums zylindrisch ausgebildet sein. Ebenso ist es möglich, dass der erste Abschnitt, um das Entformen zu erleichtern, kegelstumpfartig ausgebildet ist.

Gemäß der Erfindung schließt sich an den ersten Abschnitt des Hohlraums ein zweiter Hohlraum an, der von dem ersten Abschnitt durch das Sperrelement getrennt ist. Zumindest der zweite Hohlraum vorteilhaft aber auch der Hohlraum und der erste Abschnitt des Hohlraums haben Wandungen, die von der Flüssigkeit benetzbar sind.

Der zweite Abschnitt des Hohlraums oder der zweite Hohlraum können gemäß der Erfindung eine Entnahmeöffnung aufweisen. Die Entnahmeöffnung kann bei einer erfindungsgemäßen Vorrichtung in einer Wandung des zweiten Abschnitts des Hohlraums oder einer Wandung des zweiten Hohlraums vorgesehen sein und zwar in einem Bereich, der an die Sollbruchstelle zwischen dem Träger und dem Sperrelement möglichst unmittelbar anstößt. Dadurch soll erreicht werden, dass die aus dem ersten Abschnitt des Hohlraums austretende Flüssigkeit auf möglichst einfachem Wege zu der Entnahmeöffnung im zweiten Abschnitt, beziehungsweise im zweiten Hohlraum gelangen kann.

Der Entnahmeöffnung kann ein Kanal nachgeschaltet sein.

In dem zweiten Abschnitt des Hohlraums oder im dem zweiten Hohlraum und/oder in dem Kanal, der der Entnahmeöffnung nachgeschaltet ist, kann ein die Kapillarkraft verstärkendes Mittel vorgesehen sein. Dieses, die Kapillarkraft verstärkende Mittel dient dazu, den Transport der Flüssigkeit in den Kanal beziehungsweise durch die Entnahmeöffnung zu beschleunigen oder zu ermöglichen. Bei dem Kapillarkraft verstärkenden Mittel kann es sich um Mikrostrukturelemente, wie zum Beispiel Gräben, Stelen, Säulen oder dergleichen oder um eine Vlieseinlage handeln. Ebenso ist es möglich, dass die Mikrostrukturelemente mit einer Vlieseinlage kombiniert das kapillarkraftverstärkende Mittel bilden.

In den zweiten Abschnitt des Hohlraums oder in den zweiten Hohlraum kann ferner ein Zulaufkanal münden.

Bei einer erfindungsgemäßen Vorrichtung kann zumindest eine Wandung des zweiten Abschnitts zumindest abschnittsweise gegenüber zumindest einer angrenzenden Wandung des ersten Abschnitts zurückgesetzt sein. Dieser zurückgesetzte Abschnitt kann ringnutartig ausgebildet sein.

Gemäß der Erfindung kann die Vorrichtung ein Mittel zur Zerstörung des Deckelelementes aufweisen.

Ausführungsbeispiele für mikrostrukturierte Vorrichtungen zum entnehmbaren Speichern von kleinen Flüssigkeitsmengen sind anhand der Zeichnung näher beschrieben. Darin zeigt
- Fig. 1 bis 12a: jeweils ein Ausführungsbeispiel für eine mikrostrukturierte Vorrichtung im Schnitt,
- Fig. 13: die Vorrichtung gemäß Fig. 1 nach einer Betätigung,
- Fig. 14: einen Schnitt durch die Vorrichtung gemäß der Linie XIV-XIV in Fig. 9,
- Fig. 15: einen entsprechenden Schnitt durch eine andere Ausführungsform,
- Fig. 16: eine Draufsicht auf eine Vorrichtung mit mehreren Hohlräumen für die Aufnahme von kleinen Flüssigkeitsmengen,
- Fig. 17: ein Ausführungsbeispiel für eine erfindungsgemäße Vorrichtung vor dem Ausüben einer minimalen Kraft,
- Fig. 17a: das Ausführungsbeispiel gemäß Fig. 17 nach dem Ausüben der minimalen Kraft und
- Fig. 17b: das Ausführungsbeispiel gemäß Fig. 17 und Fig. 17a in einer Draufsicht.

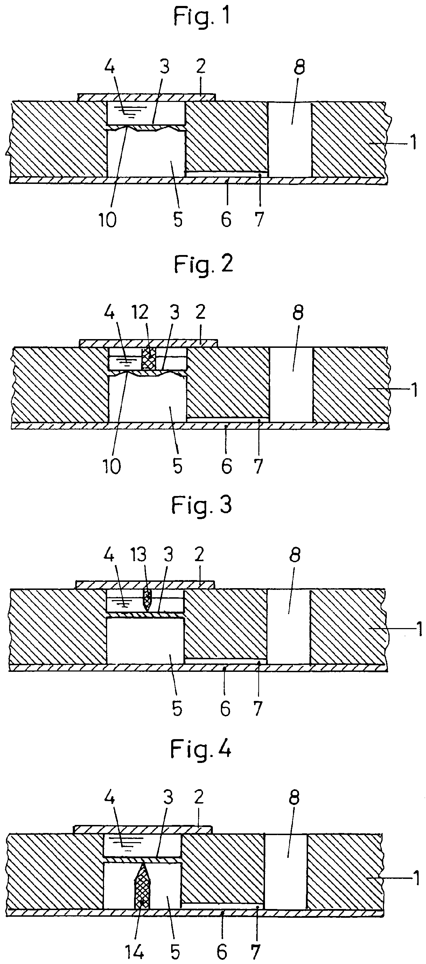

Die in den Figuren 1 bis 16 gezeigten Ausführungsbeispiele für mikrostrukturierte Vorrichtungen weisen große Ähnlichkeiten auf, daher sind einander entsprechende Komponenten mit gleichen Bezugszeichen versehen.

Das in Fig. 1 im Schnitt dargestellte Ausführungsbeispiel weist einen vorteilhaft plattenförmigen Träger 1 auf, in den von zwei Seiten einander gegenüberliegende Ausnehmungen eingebracht sind, die von einem Sperrelement 3 voneinander getrennt sind. Die Öffnung der einen Ausnehmung ist durch ein Deckelelement 2 verschlossen, wodurch zwischen dem Deckelelement 2, dem Sperrelement 3 und den seitlichen Wandungen der Ausnehmung ein erster Hohlraum 4 gebildet wird. Dieser erste Hohlraum 4 ist vollständig mit einer kleinen Flüssigkeitsmenge gefüllt. Ebenso ist es möglich, dass der erste Hohlraum 4 nur teilweise mit der Flüssigkeitsmenge befüllt ist und eine kleine Gasblase enthält. Die andere Ausnehmung ist mit einer Folie 6 verschlossen, welche auf die Fläche des Trägers 1 aufgebracht ist, in welcher die Ausnehmung vorgesehen ist. Dadurch wird ein zweiter Hohlraum 5 gebildet, der von dem Sperrelement 3 der Folie 6 und den seitlichen Wandungen der Ausnehmungen begrenzt wird.

Der Träger 1 weist ferner ein Durchgangsloch 8 auf, welches einseitig ebenfalls von der Folie 6 verschlossen ist. Dieses Durchgangsloch bildet eine Entnahmekammer, die über einen Entnahmekanal 7 mit dem zweiten Hohlraum 5 verbunden ist.

Das Sperrelement 3 weist eine umlaufende Sollbruchstelle 10 auf, die durch eine Materialverdünnung auf der dem zweiten Hohlraum 5 zugewandten Seite gebildet ist.

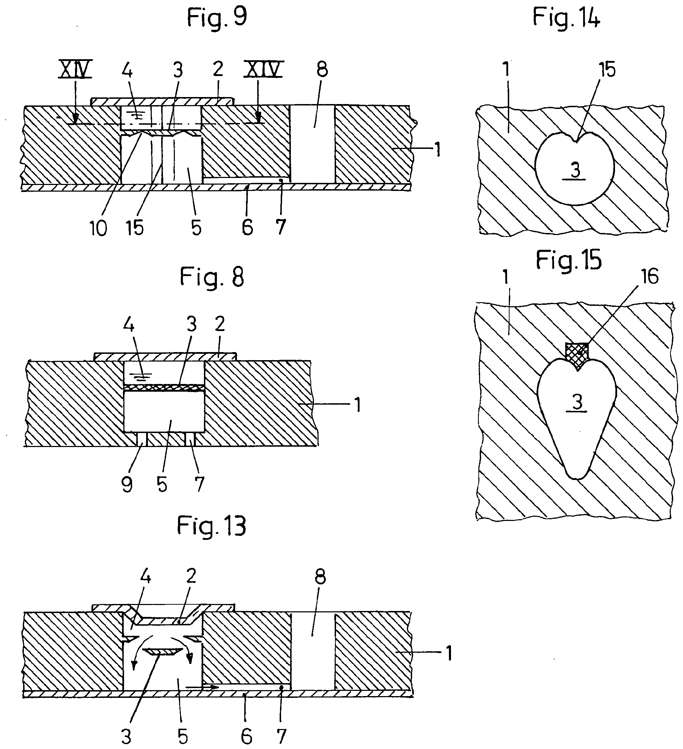

Die in dem ersten Hohlraum 4 gespeicherte kleine Flüssigkeitsmenge kann folgendermaßen aus dem ersten Hohlraum 4 entnommen werden. Durch eine Krafteinwirkung auf das Deckelelement 2 wird das Deckelelement in Richtung der Flüssigkeitsmenge gedrückt. Da die Flüssigkeitsmenge im Wesentlichen inkompressibel ist, wirkt die Kraft, die auf das Deckelelement 2 ausgeübt wird, auf das Sperrelement 3 übertragen. Diese Kraft bewirkt, dass wie in Fig. 13 dargestellt ist, der mittlere Teil des Sperrelements entlang der umlaufenden Sollbruchstelle 10 aus dem übrigen Sperrelement 3 herausgebrochen wird und so eine Verbindung zwischen dem ersten Hohlraum 4 und dem zweiten Hohlraum 5 entsteht. Auf Grund von Transportkräften, hierbei handelt es sich zumeist um Druckkräfte, die Schwerkrafteinwirkung oder Kapillarkräfte wird dann die Flüssigkeit aus dem ersten Hohlraum 4 in den zweiten Hohlraum 5, den Kanal 7 in die Entnahmekammer 8 transportiert. Vorteilhaft kann dabei in dem zweiten Hohlraum 5 oder in der Entnahmekammer 8 ein Reagenzmittel in flüssiger oder fester Form oder eine Probe eingebracht sein, mit welchem die ursprünglich in dem ersten Hohlraum gespeicherte Flüssigkeitsmenge reagiert oder vermischt wird.

Das in Fig. 2 dargestellte Ausführungsbeispiel unterscheidet sich von dem in Fig. 1 dargestellten Ausführungsbeispiel dadurch, dass der erste Hohlraum 4 nicht vollständig mit der Flüssigkeitsmenge befüllt ist. Vielmehr verbleibt zwischen dem Flüssigkeitsspiegel und dem Deckelelement 2 ein gasgefüllter Raum. Damit dennoch die Kraft, die auf das Deckelelement 2 zum Freigeben der Flüssigkeitsmenge einwirkt, auf das Sperrelement 10 übertragen werden kann, ist zwischen dem Deckelelement 2 und dem Sperrelement 3 ein Stößel vorgesehen, der einstückig mit dem mittleren Teil des Sperrelements verbunden ist.

Im Unterschied zu dem in Fig. 1 dargestellten Ausführungsbeispiel weist das in Fig. 3 dargestellte Ausführungsbeispiel ein Sperrelement auf, welches über keine Sollbruchstelle 10 verfügt. Stattdessen ist, um die Zerstörung des Sperrelementes 3 zu erreichen an der Unterseite des Deckelelementes ein Dorn 13 befestigt, der mit seiner Spitze auf das Sperrelement 3 gerichtet ist. Wird nun durch eine Krafteinwirkung das Deckelelement 2 in Richtung auf das Sperrelement 3 gedrückt, sticht der Dorn 13 mit seiner Spitze in das Sperrelement 3 ein, um die Sperrwirkung des Sperrelementes 3 aufzuheben. Die in dem ersten Hohlraum 4 gespeicherte Flüssigkeit kann dann durch die mittels des Dorn 13 in dem Sperrelement erzeugte Öffnung in den zweite Hohlraum 5 eindringen.

In Fig. 4 ist ein der Fig. 3 ähnliches Ausführungsbeispiel beschrieben, bei welchem jedoch der erste Hohlraum 4 vollständig mit der Flüssigkeitsmenge gefüllt ist, während an der Folie 6 ein in Richtung auf das Sperrelement 3 ragender Dorn 14 angebracht ist, welcher die Zerstörung des Sperrelementes 3 zur Freigabe der Flüssigkeitsmenge bewirkt. Durch eine Krafteinwirkung auf das Deckelelement 2 wird über die Flüssigkeitsmenge in dem ersten Hohlraum 4 das Sperrelement 3 in Richtung auf den Dorn 14 ausgelenkt, welcher mit seiner Spitze in das Sperrelement hineinsticht, um es zu zerstören. So dann kann die Flüssigkeitsmenge aus dem ersten Hohlraum 4 in den zweiten Hohlraum 5 eindringen.

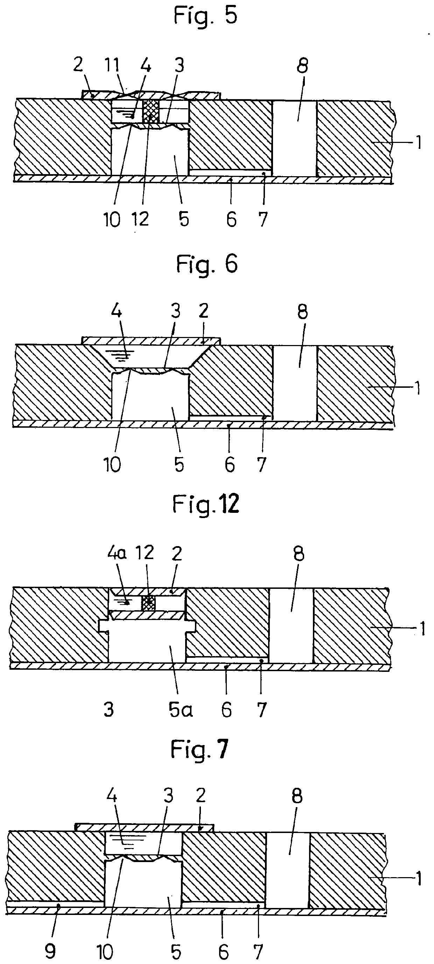

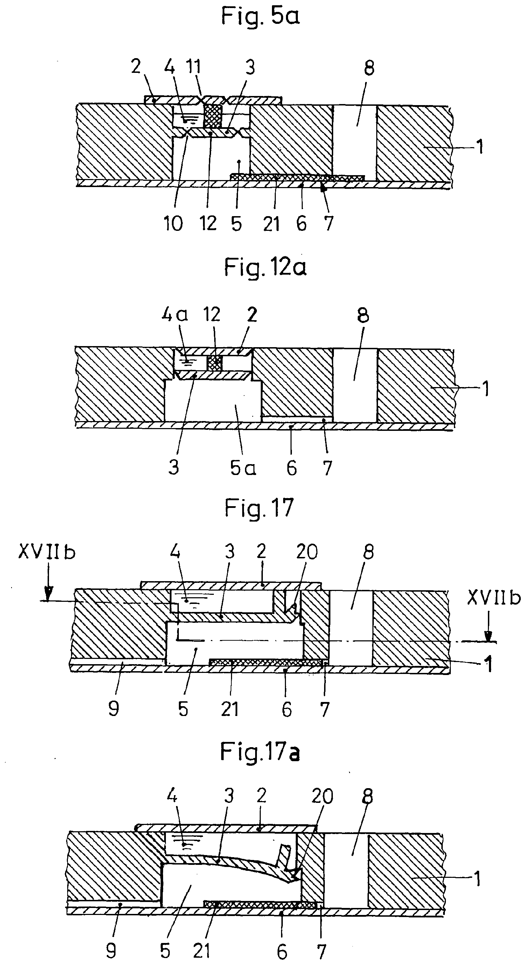

Das in Fig. 5 dargestellte Ausführungsbeispiel einer mikrostrukturierten Vorrichtung ist ähnlich wie die in Fig. 2 dargestellte Vorrichtung ausgebildet. Im Unterschied zu dem in Fig. 2 dargestellten Ausführungsbeispiel weist das Ausführungsbeispiel in Fig. 5 in dem Deckelelement 2 eine umlaufende Sollbruchstelle 11 auf. Sobald durch eine Krafteinwirkung der mittlere Bereich des Deckelelements nach unten gedrückt wird, bricht die Sollbruchstelle 11 und der Stößel 12 drückt auf den mittleren Teil des Sperrelementes 3, welches schließlich auch entlang der Sollbruchstelle 10 aufbricht. Die Flüssigkeit, welche in dem ersten Hohlraum 4 gespeichert ist, kann in den zweiten Hohlraum 5 eintreten, wobei gleichzeitig der erste Hohlraum 4 über die Öffnung in dem Deckelelement 2 belüftet wird. Die nachströmende Luft erleichtert das Ausströmen der Flüssigkeitsmenge aus dem ersten Hohlraum 4 in den zweiten Hohlraum 5.

In Fig. 5a ist eine Variante des in Fig. 5 dargestellten Ausführungsbeispiels dargestellt. Bei der Variante fasst die Sollbruchstelle in dem Sperrelement 10 einen in etwa kreisförmigen Bereich ein, der den Stößel 12 vollständig umschließt. Auch die Sollbruchstelle 11 im Deckelelement 2 fasst einen kreisförmigen Bereich ein, an dessen Unterseite der Stößel 12 anstößt. Der von der Sollbruchstelle 11 im Deckelelement 2 eingefasste Bereich hat dabei einen deutlich kleineren Durchmesser als der von der Sollbruchstelle 10 eingefasste Bereich des Sperrelements. Dieses hat zur Folge, dass bei einem Aufbringen der minimalen Kraft, die in diesem Fall ausreicht, um die Sollbruchstellen 10, 11 im Deckelelement 2 beziehungsweise im Sperrelement 3 zu zerstören, so dass die ausgebrochenen Bereiche mit dem Stößel 12 nach unten in den zweiten Hohlraum 5 gedrückt werden können. Dadurch wird zum einen ein Wiederverschließen der durch das Sperrelement 3 freigegebenen Öffnung verhindert, so dass die Flüssigkeit aus dem Hohlraum 4 in den zweiten Hohlraum 5 austreten kann. Zum anderen wird eine Belüftung des Hohlraums 4 ermöglicht, welches ebenfalls einen erleichterten Austritt der Flüssigkeit aus dem Hohlraum 4 in den zweiten Hohlraum 5 ermöglicht.

Ferner ist bei der Variante der Vorrichtung gemäß der Fig. 5a in dem Entnahmekanal 7 sowie in einem Bereich des zweiten Hohlraums 5 vor dem Entnahmekanal eine Vließeinlage 21 vorgesehen. Diese Vließeinlage bewirkt eine erhöhte Kapillarkraft, welches einen beschleunigten Transport der in den zweiten Hohlraum 5 eingetretenen Flüssigkeit durch den Entnahmekanal 8 ermöglicht.

Das in Fig. 6 dargestellte Ausführungsbeispiel einer mikrostrukturierten Vorrichtung entspricht im Wesentlichen der in Fig. 1 dargestellten, wobei jedoch anders als die in Fig. 1 dargestellte Vorrichtung die in Fig. 6 dargestellte Vorrichtung keinen zylindrisch ausgebildeten ersten Hohlraum hat. Der erste Hohlraum des in Fig. 6 dargestellten Ausführungsbeispiels läuft vielmehr konisch in Richtung auf das Sperrelement 3 zu und ist somit im Wesentlichen kegelstumpfartig ausgebildet.

Das Ausführungsbeispiel gemäß Fig. 7 entspricht im Wesentlichen dem Ausführungsbeispiel gemäß Fig. 1 es weist jedoch zusätzlich einen Zulaufkanal 9 auf, welcher in den zweiten Hohlraum 5 mündet. Über diesen Zulaufkanal 9 kann eine zweite Flüssigkeit in den zweiten Hohlraum 5 geführt werden, welcher sich nach der Zerstörung des Sperrelementes 3 mit der Flüssigkeitsmenge aus dem ersten Hohlraum 4 vermischt. Bei der zugeführten Flüssigkeit kann es sich wie auch bei der Flüssigkeitsmenge in dem ersten Hohlraum 4 um eine Probe, eine Reagenzflüssigkeit oder eine Spülflüssigkeit handeln.

Das in Fig. 8 gezeigte Ausführungsbeispiel weist ebenfalls einen ersten Hohlraum 4 und einen zweiten Hohlraum 5 auf, wobei die Vorrichtung gemäß Fig. 8 anders hergestellt ist als die gemäß Fig. 1 bis 7. Der Träger des Ausführungsbeispiels gemäß Fig. 8 weist nämlich eine einseitig in den Träger eingebrachte sacklochartige Ausnehmung auf, die durch ein zwischen die seitlichen Wandungen eingeklebtes Sperrelement 3 in einen ersten Hohlraum 4 und einen zweiten Hohlraum 5 unterteilt ist. Von der der Ausnehmung gegenüber liegenden Seite des Trägers sind Kanäle 9, 7 von der Außenseite des Trägers bis zu dem zweiten Hohlraum 5 geführt, welche in den zweiten Hohlraum 5 münden. Der eine Kanal bildet dabei einen Zulaufkanal 9, während der andere Kanal einen Entnahmekanal 7 bildet. Das zwischen den ersten Hohlraum 4 und den zweiten Hohlraum 5 eingeklebte, eingepresste oder eingeschrumpfte Sperrelement 3 weist eine auf die bekannte Art und Weise ausgestaltete Sollbruchstelle 10 auf, an welcher das Sperrelement 3 zerstört werden kann. Im Übrigen ist der erste Hohlraum 4 vollständig mit einer Flüssigkeitsmenge befüllt, so dass eine Krafteinwirkung auf das Deckelelement 2 ein Zerstören des Sperrelements 3 bewirkt, wodurch die Flüssigkeitsmenge in dem ersten Hohlraum 4 in den zweiten Hohlraum 5 eintreten kann.

Fig. 9 und 14 zeigen ein Ausführungsbeispiel, welches mit besonderen Mitteln zur Zerstörung des Deckelelementes 2 versehen ist. Die Mittel zur Zerstörung werden durch einen in den ersten Hohlraum 4 keilförmig hineinragenden Vorsprung 15 der seitlichen Wandung des ersten Hohlraums 4 gebildet. Dieser Vorsprung bildet eine Spitze, welche an dem Deckelelement 2 anliegt. Wird nun das Deckelelement 2 durch Krafteinwirkung nach unten gedrückt, presst sich die Spitze des Vorsprungs 15 in das Deckelelement 2 ein und zerstört dieses. Dadurch wird eine Möglichkeit geschaffen, den ersten Hohlraum 4 bei einer Freigabe der in dem ersten Hohlraum 4 enthaltenen Flüssigkeit durch eine Zerstörung des Sperrelementes 3 den ersten Hohlraum 4 zu entlüften, was den Austritt der Flüssigkeit aus dem zweiten Hohlraum 5 erleichtert. Wie in Fig. 14 dargestellt ist, hat der erste Hohlraum einen im Querschnitt kreisförmigen Querschnitt.

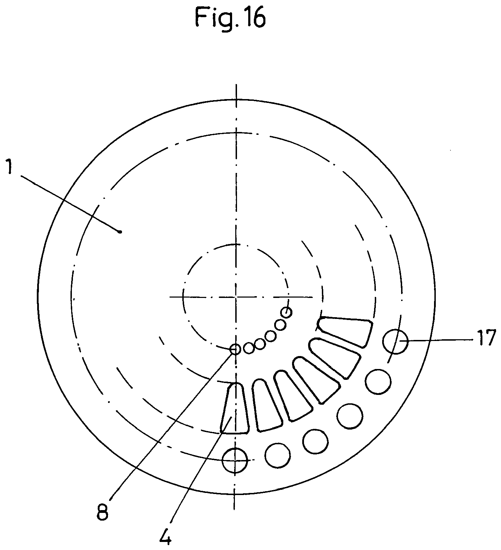

In Fig. 15 ist dagegen ein Querschnitt einer ähnlichen Vorrichtung gezeigt, welcher kreissektorartig ist. Dieses hat den Vorteil, dass in einer Vorrichtung mit mehreren derartigen ersten Hohlräumen, wie er beispielsweise in Fig. 16 dargestellt ist, eine Vielzahl von ersten Hohlräumen kompakt ineinander angeordnet sein können. Fig. 15 zeigt im Übrigen ein weiteres alternatives Mittel zur Zerstörung des Deckelelements 2, welches durch ein Keil 16 gebildet wird, der in einer Aussparung der seitlichen Wandung der ersten Kammer 4 eingesetzt wird, ansonsten aber ähnlich wie der Vorsprung 15 gemäß Fig. 14 eine Zerstörung des Deckelelements 2 bei einer Krafteinwirkung zur Folge hat.

Die in Fig. 16 dargestellte Draufsicht auf eine Vorrichtung zeigt, dass eine Vorrichtung vorteilhaft mehrere erste Hohlräume 4 und dem damit verbundenen Sperrelement 3 aufweist. Der unter dem ersten Hohlraum 4 angeordnete zweite Hohlraum (nicht dargestellt) ist über einen nicht dargestellten Zulaufkanal mit einer Einlasskammer 17 und über einen Entnahmekanal mit einer Entnahmekammer 8 verbunden. Die Einlasskammern 17 können im Übrigen auch untereinander verbunden sein.

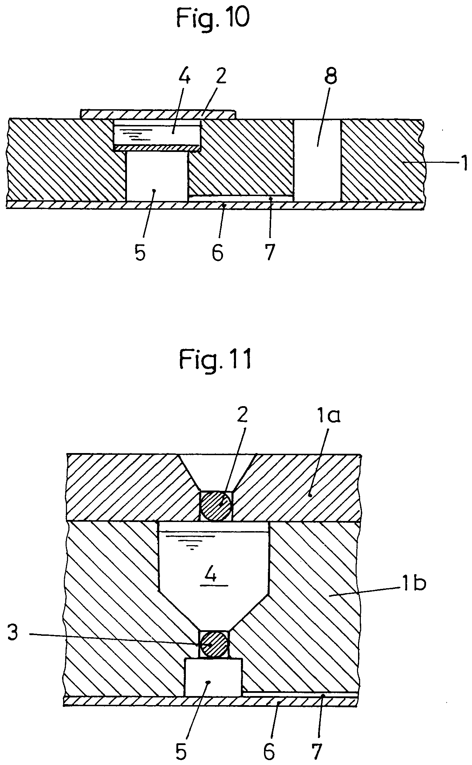

In Fig. 10 ist ein Ausführungsbeispiel für eine mikrostrukturierte Vorrichtung dargestellt, die in Träger 1 eine Durchgangsbohrung mit einem Absatz aufweist. Dadurch hat die Durchgangsbohrung oberhalb des Absatzes einen Durchmesser, der größer ist, als unterhalb des Absatzes. Auf den Absatz ist eine das Sperrelement 3 bildende Membran aufgelegt, die einen Außendurchmesser hat, der dem Innendurchmesser der Durchgangsbohrung entspricht. Durch das Sperrelement 3 wird die Durchgangsbohrung in zwei voneinander getrennte Teile unterteilt, nämlich dem ersten Hohlraum und dem zweiten Hohlraum 5, wobei der erste Hohlraum 4 mit dem Deckelelement 2 und der zweite Hohlraum mit der Folie 6 verschlossen ist. Im Übrigen weist die Vorrichtung einen auf die bekannte Art und Weise ausgestalteten Kanal 7 bzw. ein auf die bekannte Art und Weise ausgestaltete Entnahmekammer 8 auf.

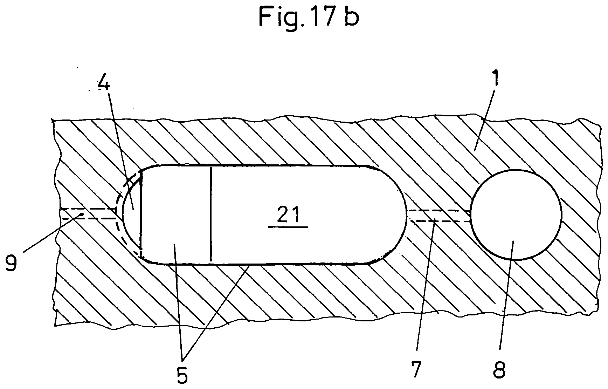

Das in den Figuren 17 bis 17b dargestellte erfindungsgemäße Ausführungsbeispiel weist einen Hohlraum 4 und einen zweiten Hohlraum 5 auf, die im Querschnitt im Wesentlichen oval sind. Zwischen den beiden Hohlräumen 4, 5 ist das Sperrelement 3 angeordnet. Dieses Sperrelement 3 ist einstückig mit dem Träger 1 verbunden. Ferner ist das Sperrelement 3 einstückig mit einem Stößel 12 verbunden, der in einem ersten Endbereich des Sperrelements 3 zwischen einem Deckelelement 2, mit welchem der Hohlraum 4 nach oben hin verschlossen ist, und dem Sperrelement 3 eingesetzt ist. In diesem ersten Endbereich des Sperrelements ist eine Sollbruchstelle 10 zwischen dem Sperrelement 3 und dem Träger 1 vorgesehen, die sich von diesem Endbereich ausgehend entlang der seitlichen Wandung der Hohlräume 4, 5 zum gegenüberliegenden Endbereich erstreckt, wobei der gegenüberliegende zweite Endbereich nicht mit einer Sollbruchstelle versehen ist. Wird auf das Deckelelement 2 die minimale zum Zerstören des Sperrelements notwendige Kraft aufgebracht, reißt das Sperrelement entlang der Sollbruchstelle von dem Träger 1 ab. Das Sperrelement 3 ist dann nur noch mehr über den zweiten Endbereich mit dem Träger 1 verbunden. Dieser zweite Endbereich bildet somit ein Scharnierbereich, an welchem das Sperrelement schwenkbar gelagert ist.

In den zweiten Hohlraum 5 ist im ersten Endbereich des Sperrelements 3 ein Absatz eingeformt. Dieser Absatz wirkt zusammen mit einer Rastnase 20 am ersten Endbereich des Sperrelements 3 als Element zum Festhalten des Sperrelements in einer ausgelenkten Stellung, nachdem die minimale Kraft auf das Deckelelement 2 eingewirkt hat. Die Rastnase 20 rastet durch das Herausbrechen und Auslenken des Sperrelements 3 nach unten hinter den Absatz in der Wandung des zweiten Hohlraums 5 ein. In dieser ausgelenkten Stellung kann dann die Flüssigkeit aus dem Hohlraum 4 in den zweiten Hohlraum 5 strömen, auch nachdem die minimale Kraft nicht mehr auf das Deckelelement 2 einwirkt.

Auf dem Boden des zweiten Hohlraums 5 ist in einem mittleren Bereich und dem Endbereich eine Vließeinlage 21 vorgesehen. Diese Vließeinlage bewirkt eine erhöhte Kapillarkraft, um die in den zweiten Hohlraum 5 eingetretene Flüssigkeit durch einen Entnahmekanal 7 zur Entnahmekammer 8 zu transportieren.

Das in Fig. 11 dargestellte Ausführungsbeispiel unterscheidet sich von den bisher beschriebenen Vorrichtungen durch eine Vielzahl von Merkmalen, wobei gleichartige Merkmale mit gleichen Bezugzeichen versehen sind. Der Träger 1a, 1b der Vorrichtung gemäß Fig. 11 ist zweiteilig ausgeführt und weist ein plattenförmiges Oberteil 1a und ein plattenförmiges Unterteil 1b auf. Das Oberteil hat eine konische Ausnehmung, an die sich eine zylindrische Bohrung anschließt. In die zylindrische Bohrung ist eine vorzugsweise geringfügig elastische Kugel dichtend eingesetzt, die das Deckelelement 2 der Vorrichtung bildet. Das Unterteil 1b des Trägers, das auf der Unterseite des Oberteils 1a angebracht ist, weist mit den Ausnehmungen des Oberteils 1a bzw. dem Deckelelement 2 fluchtend einen ersten zylindrischen Abschnitt, einen konischen Abschnitt und einen zweiten zylindrischen Abschnitt auf, an den sich eine vorteilhaft von der Unterseite eingebrachte zylindrische Ausnehmung anschließt. In dem zweiten zylindrischen Abschnitt der ersten Ausnehmung ist eine Kugel als Sperrelement 3 dichtend eingesetzt, die den ersten zylindrischen Abschnitt und den konischen Abschnitt von der von der Unterseite des Unterteils 1b eingebrachten Ausnehmung trennt. Der erste zylindrische Abschnitt und der konische Abschnitt bilden so den ersten mit einer Flüssigkeit fast vollständig gefüllten Hohlraum 4. Auf der Unterseite des Unterteils 1b ist eine Folie 6 aufgebracht, wodurch der zweite Hohlraum aus der von der Unterseite eingebrachten zylindrischen Ausnehmung gebildet ist. Durch eine Krafteinwirkung auf das Deckelelement 2 wird über die Flüssigkeit im ersten Hohlraum 4 das Sperrelement 3 in den zweiten Hohlraum 5 gedrückt, wodurch die Flüssigkeit in den zweiten Hohlraum fließen und aus diesem über den Kanal 7 entnommen werden kann.

Der Durchmesser des ersten Hohlraums kann dabei zum Beispiel 1 bis 3 mm, vorzugsweise 1,5 mm betragen. Das gleiche gilt für den zweiten Hohlraum. Das Sperrelement 3 und das Deckelelement 2 können einen Durchmesser von 0,5 bis 0,7 mm aufweisen.

Der Durchmesser des ersten Hohlraums eines der Ausführungsbeispiele gemäß Fig. 1 bis 10 kann 2 bis 8 mm, vorzugsweise jedoch 2 bis 5 mm betragen. Die Höhe kann 1 bis 7 mm und das Volumen zwischen 10 bis 100 mm³ betragen. Der Träger 1 sowie das Sperrelement 3 kann aus Polystyrol oder Polycarbonat hergestellt sein.

Das in Fig. 12 dargestellte Ausführungsbeispiel weist im Unterschied zu den übrigen Ausführungsbeispielen nur einen Hohlraum auf, welcher über einen ersten Abschnitt 4a, einen zweiten Abschnitt 5a verfügt. Der Hohlraum ist variabel in den ersten Abschnitt 4a und den zweiten Abschnitt 5a aufteilbar. Die Trennung erfolgt dabei über ein Sperrelement, welches verschiebbar zwischen den seitlichen Wandungen des ersten Abschnitts gelagert ist. Dieses Sperrelement ist über einen Stößel 12 mit einem ebenfalls verschiebbar in dem ersten Abschnitt 4a gelagerten Deckelelement 2 verbunden. Im oberen, dem ersten Abschnitt 4a zugewandten Bereich des zweiten Abschnitts 5a des Hohlraumes ist im Übrigen die seitliche Wandung des Hohlraumes ringnutartig zurückgesetzt.

Die in Fig. 12 dargestellte Vorrichtung kann folgendermaßen betrieben werden. Zunächst wird das aus dem Sperrelement 3, dem Stößel 12 und dem Deckelelement 2 gebildete Bauteil soweit aus dem ersten Abschnitt 4a herausgezogen, dass das Deckelelement 2 aus dem ersten Abschnitt 4a herausragt. Durch einen sich dabei zwischen dem Deckelelement 2 und dem oberen Ende des ersten Abschnitts 4a des Hohlraums entstehende Spalt kann dann die Flüssigkeit in den Hohlraum 4a eingefüllt werden. Um die Flüssigkeit dann in dem ersten Abschnitt 4a des Hohlraumes zu speichern, wird das Bauteil aus dem Sperrelement 3, dem Stößel 12 und dem Deckelelement 2 nach unten geschoben, bis das Deckelelement 2 dichtend an den seitlichen Wandungen des ersten Abschnitts 4a des Hohlraums anliegt. Soll nun die in dem ersten Abschnitt 4a des Hohlraums gespeicherte Flüssigkeitsmenge freigegeben werden, wird das Deckelelement 2 durch Krafteinwirkung nach unten bewegt. Dann ragt das Sperrelement 3 in den ringnutartigen Abschnitt am oberen Ende des zweiten Abschnitts 5a des Hohlraums hinein. Durch die Ringnut wird dann eine strömungstechnische Verbindung zwischen dem ersten Abschnitt 4a und dem zweiten Abschnitt 5a des Hohlraums hergestellt, so dass die Flüssigkeit aus dem ersten Abschnitt 4a in den zweiten Abschnitt 5a eintreten kann.

In Fig. 12a ist eine Variante zu dem Ausführungsbeispiel gemäß Fig. 12 dargestellt. Diese Variante unterscheidet sich dadurch, dass der zweite Abschnitt 5a des Hohlraums gegenüber dem ersten Abschnitt 4a einen größeren Durchmesser hat. Durch diesen Absatz ist es möglich, durch das Ausüben der äußeren Kraft, das Deckelelement, den Stößel 12 und das Sperrelement 11 vollständig nach unten zu verschieben, so dass das Deckelelement 2, das Sperrelement 3 und der Stößel 12 vollständig in den zweiten Abschnitt 5a des Hohlraums geschoben werden und in diesen hinein fallen können. Ist das Element aus Deckelelement 2, Sperrelement 3 und Stößel 12 in dem zweiten Abschnitt 5a des Hohlraums, ist sichergestellt, dass die Flüssigkeit in den zweiten Abschnitt 5a gelangt ist, beziehungsweise über den zweiten Abschnitt 5a des Hohlraums in den Entnahmekanal 7 gelangen kann.

Eine erfindungsgemäße Vorrichtung ermöglicht es Flüssigkeitsmengen über eine längere Zeit in einem Hohlraum zu speichern, bevor sie dann zur Durchführung von Reaktionen oder anderen chemischen Abläufen freigegeben werden. Die bisher dazu üblichen kleinen in den Träger eingesetzten Behältnisse (Container), die zuvor mit der Flüssigkeit befüllt sind und dann mittels Werkzeuge aufgestochen werden müssen, sind nicht mehr notwendig. Die Flüssigkeit wird vielmehr unmittelbar in dem Träger gespeichert, was den Vorteil hat, dass eine kompaktere Anordnung der Flüssigkeitsmengen auf einem Träger möglich ist und auch die Geometrie der die Flüssigkeit speichernden Hohlräume freigewählt werden kann, ganz so wie die Bedürfnisse der Praxis es erfordern.

## Patentansprüche

1. Mikrostrukturierte Vorrichtung zum entnehmbaren Speichern von kleinen Flüssigkeitsmengen wobei:
- die Vorrichtung einen ersten Hohlraum (4) mit zumindest einem ersten Abschnitt zum Speichern der kleinen Flüssigkeitsmenge aufweist,
- der erste Abschnitt mit einem Deckelelement (2) und einem Sperrelement (3) verschlossen ist,
- das Deckelelement (2) eine Membrane oder Folie ist,
- die Vorrichtung einen Träger (1) aufweist,
- die Vorrichtung ein Mittel zur Übertragung einer Kraft von dem Deckelelement (2) zu dem Sperrelement (3) aufweist, welche eine Verbindung zwischen dem Sperrelement und dem Träger so zerstört oder das Sperrelement so zerstört, dass die Flüssigkeitsmenge aus dem ersten Abschnitt des Hohlraums (4) entnehmbar ist,
- der erste Abschnitt des ersten Hohlraums (4) in den Träger (1) eingeformt ist,
- das Sperrelement (3) und der Träger (1) einstückig miteinander verbunden sind,
- das Deckelelement (2) bei Ausüben einer minimalen Kraft zum Zerstören der Verbindung zwischen dem Sperrelement (3) und dem Träger (1) oder zum Zerstören des Sperrelements (3) unzerstörbar ist oder an zumindest einer Sollbruchstelle (11) zerstörbar ist,
**dadurch gekennzeichnet, dass**
- die Vorrichtung im Träger (1) einen zweiten Hohlraum (5) aufweist, der durch das Sperrelement von dem ersten Hohlraum (4) getrennt ist,
- das Sperrelement (3) einen ersten und einen zweiten Endbereich hat,
- der erste Endbereich eine Sollbruchstelle hat,
- in dem ersten Endbereich im zweiten Hohlraum (5) ein Absatz ausgebildet ist,
- der erste Endbereich einstückig mit einem Stößel (12) verbunden ist,
- am ersten Endbereich eine Rastnase (20) vorgesehen ist,
- der zweite Endbereich einen Scharnierbereich bildet, an dem das Sperrelement (3) schwenkbar gelagert ist,
- die Vorrichtung Elemente zum Festhalten des Sperrelements (3) umfasst, mit welchen nach dem Ausüben der minimalen Kraft das Sperrelement in einer ausgelenkten Stellung gehalten werden kann, wobei der Absatz und die Rastnase als Elemente zum Festhalten des Sperrelementes (3) zusammenwirken.

2. Vorrichtung nach Anspruch 1, **dadurch gekennzeichnet, dass** der Träger einstückig ist.

3. Vorrichtung nach einem der vorherigen Ansprüche, **dadurch gekennzeichnet, dass** das Deckelelement (2) durch Laminieren, Siegeln oder Kleben mit dem Träger (1) verbunden ist.

4. Vorrichtung nach einem der vorherigen Ansprüche, **dadurch gekennzeichnet, dass** das Deckelelement (2) metallisiert ist.

5. Vorrichtung nach einem der Ansprüche 1 bis 4, **dadurch gekennzeichnet, dass** die Vorrichtung ein Element zum Festhalten des Deckelelements (2) umfasst, mit welchem beim Ausüben der minimalen Kraft das Deckelelement (2) in einer ausgelenkten Stellung gehalten werden kann.

6. Vorrichtung nach einem der Ansprüche 1 bis 4, **dadurch gekennzeichnet, dass** die Sollbruchstelle (11) im Deckelelement (2) einen Bereich des Deckelelements (2) einfasst, der kleiner ist als ein von der Sollbruchstelle (10) zwischen dem Träger (1) und dem Sperrelement (3) eingefasster Bereich.

7. Vorrichtung nach einem der Ansprüche 1 bis 6, **dadurch gekennzeichnet, dass** die Vorrichtung ein Mittel zum Zerstören des Deckelelements umfasst, mit welchem beim Ausüben der minimalen Kraft das Deckelelement (2) zerstörbar ist.

8. Vorrichtung nach einem der vorherigen Ansprüche, **dadurch gekennzeichnet, dass** die Vorrichtung Mittel (15, 16) zur Zerstörung des Deckelelements aufweist.

9. Vorrichtung nach einem der Ansprüche 1 bis 8, **dadurch gekennzeichnet, dass** die Sollbruchstelle (10) zwischen dem Sperrelement (3) und dem Träger (1) den Befestigungsbereich des Stößels am Sperrelement (3) mit Ausnahme eines Scharnierbereichs umschließt.

10. Vorrichtung nach Anspruch 9, **dadurch gekennzeichnet, dass** der Scharnierbereich der Bereich zwischen Träger (1) und Sperrelement (3) ist, der zum Stößel den größtmöglichen Abstand hat.

11. Vorrichtung nach Anspruch 10, **dadurch gekennzeichnet, dass** dem Scharnierbereich gegenüberliegend der Rastnase an dem Sperrelement vorgesehen ist.

12. Vorrichtung nach einem der vorherigen Ansprüche, **dadurch gekennzeichnet, dass** die Vorrichtung auf der dem ersten Abschnitt des Hohlraums (4) abgewandten Seite des Sperrelements (3) einen auf das Sperrelement (3) gerichteten Dorn (14) umfasst.

13. Vorrichtung nach einem der vorherigen Ansprüche, **dadurch gekennzeichnet, dass** der erste Abschnitt des Hohlraums (4) zylindrisch ausgebildet ist.

14. Vorrichtung nach einem der vorherigen Ansprüche, **dadurch gekennzeichnet, dass** der erste Abschnitt des Hohlraums (4) kegelstumpfartig ausgebildet ist.

15. Vorrichtung nach dem vorherigen Anspruch, **dadurch gekennzeichnet, dass** der zweite Abschnitt (5a) des Hohlraums oder der zweite Hohlraum (5) eine Entnahmeöffnung aufweist.

16. Vorrichtung nach Anspruch 15, **dadurch gekennzeichnet, dass** die Entnahmeöffnung in einer Wandung des zweiten Abschnitts (5a) des Hohlraums oder eine Wandung des zweiten Hohlraums vorgesehen ist, die an die Sollbruchstelle (10) zwischen Träger (1) und Sperrelement (3) unmittelbar anstößt.

17. Vorrichtung nach Anspruch 15 oder 16, **dadurch gekennzeichnet, dass** der Entnahmeöffnung ein Kanal (7) nachgeschaltet ist.

18. Vorrichtung nach einem der Ansprüche 13 bis 17, **dadurch gekennzeichnet, dass** in dem zweiten Abschnitt (5a) des Hohlraums oder in dem zweiten Hohlraum (5) und/oder in dem Kanal (7) die kapillarkraftverstärkenden Mittel vorgesehen sind.

19. Vorrichtung nach Anspruch 18, **dadurch gekennzeichnet, dass** das kapillarkraftverstärkende Mittel durch Mikrostrukturelemente wie Gräben, Stelen, Säulen oder dergleichen und/oder durch eine Vlieseinlage gebildet wird.

20. Vorrichtung nach einer der vorherigen Ansprüche 1 bis 19, **dadurch gekennzeichnet, dass** in den zweiten Abschnitt (5a) des Hohlraums oder den zweiten Hohlraum (5) ein Zulaufkanal mündet.

21. Vorrichtung nach den Ansprüchen 1 bis 20, **dadurch gekennzeichnet, dass** zumindest eine Wandung des zweiten Abschnitts (5a) zumindest abschnittsweise gegenüber zumindest einer angrenzenden Wandung des ersten Abschnitts (4a) zurückgesetzt ist.

22. Verfahren zum Entnehmen einer in einer Vorrichtung nach einem der Ansprüche 1 bis 21 gespeicherten Flüssigkeit, **gekennzeichnet durch** folgende Schritte:
- auf das Deckelelement (2) wird eine Kraft ausgeübt;
- das Mittel zur Übertragung der Kraft überträgt die Kraft auf das Sperrelement (3);
- auf Grund der Krafteinwirkung auf das Sperrelement (3), wird eine stoffschlüssige Verbindung zwischen dem Sperrelement (3) und dem Träger (1) zerstört oder wird das Sperrelement (3) zerstört;
- nach der Krafteinwirkung ist im Bereich des Sperrelementes (3) eine Freigabeöffnung entstanden, so dass die Flüssigkeitsmenge aus dem ersten Abschnitt des Hohlraums (4) entnehmbar ist.

## Claims

1. Microstructured device for removably storing small quantities of liquid, wherein:
- the apparatus has a first cavity (4) with at least a first section for storing the small amount of liquid,
- the first section is closed by a cover element (2) and a blocking element (3),
- the cover element (2) is a membrane or foil,
- the device has a carrier (1),
- the device comprises means for transmitting a force from the cover element (2) to the blocking element (3), which destroys a connection between the blocking element and the carrier or destroys the blocking element such that the quantity of liquid from the first section of the cavity (4) is removable,
- the first portion of the first cavity (4) is formed in the carrier (1),
- the blocking element (3) and the carrier (1) are connected to one another in one piece,
- the cover element (2) is indestructible when a minimum force is exerted to destroy the connection between the blocking element (3) and the carrier (1) or to destroy the blocking element (3) or is destructible at least at a predetermined breaking point (11), **characterised in that**
- the device in the carrier (1) has a second cavity (5) which is separated from the first cavity (4) by the blocking element,
- the blocking element (3) has a first and a second end region,
- the first end region has a predetermined breaking point,
- in the first end region in the second cavity (5) a shoulder is formed,
- the first end region is connected in one piece to a plunger (12),
- a latch (20) is provided at the first end region,
- the second end region forms a hinge region on which the blocking element (3) is pivotally mounted,
- the device comprises elements for holding the blocking element (3) with which, after applying the minimum force, the blocking element can be held in a deflected position, wherein the shoulder and the blocking element interact as elements for holding the blocking element (3).

2. Device according to claim 1, **characterised in that** the carrier is one piece.

3. Device according to one of the preceding claims, **characterised in that** the cover element (2) is connected to the carrier by means of lamination, sealing or adhesive bonding (1).

4. Device according to one of the preceding claims, **characterised in that** the cover element (2) is metallised.

5. Device according to one of claims 1 to 4, **characterised in that** the device comprises an element for holding the cover element (2), with which, when applying the minimum force, the cover element (2) can be held in a deflected position.

6. Device according to one of claims 1 to 4, **characterised in that** the predetermined breaking point (11) in the cover element (2) encloses a region of the cover element (2), which is smaller than a region enclosed by the predetermined breaking point (10) between the carrier (1) and the blocking element (3).

7. Device according to one of claims 1 to 6, **characterised in that** the device comprises a means for destroying the cover element, with which when exerting the minimum force, the cover element (2) is destructible.

8. Device according to one of the preceding claims, **characterised in that** the device comprises means (15, 16) for the destruction of the cover element.

9. Device according to one of claims 1 to 8, **characterised in that** the predetermined breaking point (10) between the blocking element (3) and the carrier (1) surrounds the mounting region of the plunger on the blocking (3) with the exception of a hinge region.

10. Device according to claim 9, **characterised in that** the hinge region is the area between the carrier (1) and blocking element (3), which has the greatest possible spacing from the plunger.

11. Device according to claim 10, **characterised in that** the latch is provided on the blocking element opposite the hinge region.

12. Device according to one of the preceding claims, **characterised in that** the device comprises a mandrel (14) directed towards the blocking element (3) on the side of the blocking element (3) facing away from the first portion of the cavity (4).

13. Device according to one of the preceding claims, **characterised in that** the first portion of the cavity (4) is cylindrical in shape.

14. Device according to one of the preceding claims, **characterised in that** the first portion of the cavity (4) is truncated cone in shape.

15. Device according to the preceding claim, **characterised in that** the second portion (5a) of the cavity or the second cavity (5) has a removal opening.

16. Device according to claim 15, **characterised in that** the removal opening in a wall of the second portion (5a) of the cavity or a wall of the second cavity is provided, which directly abuts the predetermined breaking point (10) between the carrier (1) and blocking element (3).

17. Device according to claim 15 or 16, **characterised in that** the removal opening is connected downstream of a channel (7).

18. Device according to one of claims 13 to 17, **characterised in that** capillary force-enhancing means are provided in the second portion (5a) of the cavity or in the second cavity (5) and / or in the channel (7).

19. Device according to claim 18, **characterised in that** the capillary force-enhancing means is formed by micro-structural elements such as trenches, steles, columns or the like and / or by a fleece insert.

20. Device according to one of the preceding claims 1 to 19, **characterised in that** an inlet channel converges in the second portion (5a) of the cavity or in the second cavity (5).

21. Device according to claims 1 to 20, **characterised in that** at least one wall of the second portion (5a) is at least partially repositioned backwards relative to at least one adjacent wall of the first portion (4a).

22. Method for withdrawing a liquid stored in a device according to one of Claims 1 to 21, **characterised by** the following steps:
- a force is exerted on the cover element (2);
- the means for transmitting the force - transmits the force to the blocking element (3);
- due to the action of force on the blocking element (3), a material-closure connection between the blocking element (3) and the carrier (1) is destroyed or the blocking element (3) is destroyed;
- after the force effect in the area of the blocking element (3) a release opening emerged, so that the amount of liquid from the first portion of the cavity (4) is removable.

## Revendications

1. Dispositif à microstructures destiné au stockage temporaire de petites quantités de liquides, dans lequel :
- le dispositif comporte un premier espace creux (4) avec au moins une première partie destinée à stocker la petite quantité de liquide,
- la première partie est fermée avec un élément formant couvercle (2) et avec un élément de fermeture (3),
- l'élément formant couvercle (2) est une membrane ou une feuille,
- le dispositif comporte un support (1),
- le dispositif comporte des moyens pour transférer une force de l'élément formant couvercle (2) à l'élément de fermeture (3), laquelle force détruit une liaison entre l'élément de fermeture et le support ou détruit l'élément de fermeture de telle sorte que la quantité de liquide peut être extraite de la première partie de l'espace creux (4),
- la première partie de l'espace creux (4) est formée dans le support (1),
- l'élément de fermeture (3) et le support (1) sont assemblés l'un à l'autre de manière à former une seule pièce,
- lors de l'exercice d'une force minimale destinée à détruire la liaison entre l'élément de fermeture (3) et le support (1) ou à détruire l'élément de fermeture (3), l'élément formant couvercle (2) est indestructible ou est destructible au moins au niveau d'un point destiné à la rupture (11),
**caractérisé en ce que**
- le dispositif comporte dans le support (1) un second espace creux (5) qui est séparé du premier espace creux (4) par l'élément de fermeture,
- l'élément de fermeture (3) a une première zone d'extrémité et une seconde zone d'extrémité,
- la première zone d'extrémité a un point destiné à la rupture,
- dans la première zone d'extrémité, un décrochement est réalisé dans le second espace creux (5),
- la première zone d'extrémité est assemblée avec un coulisseau (12) de manière à former une seule pièce,
- un taquet d'arrêt (20) est prévu au niveau de la première zone d'extrémité,
- la seconde zone d'extrémité forme une zone de charnière au niveau de laquelle l'élément de fermeture (3) est monté de manière à pouvoir pivoter,
- le dispositif comprend des éléments qui sont destinés à tenir l'élément de fermeture (3) et avec lesquels, après l'exercice de la force minimale, l'élément de fermeture peut être tenu dans une position sortie, le décrochement et le taquet d'arrêt coopérant alors comme éléments destinés à tenir l'élément de fermeture (3).

2. Dispositif selon la revendication 1, **caractérisé en ce que** le support est d'une seule pièce.

3. Dispositif selon l'une quelconque des revendications précédentes, **caractérisé en ce que** l'élément formant couvercle (2) est assemblé au support (1) par laminage, scellement ou collage.

4. Dispositif selon l'une quelconque des revendications précédentes, **caractérisé en ce que** l'élément formant couvercle (2) est métallisé.

5. Dispositif selon l'une quelconque des revendications 1 à 4, **caractérisé en ce que** le dispositif comprend un élément qui est destiné à tenir l'élément formant couvercle (2) et avec lequel, lors de l'exercice de la force minimale, l'élément formant couvercle (2) peut être tenu dans une position sortie.

6. Dispositif selon l'une quelconque des revendications 1 à 4, **caractérisé en ce que** le point destiné à la rupture (11) dans l'élément formant couvercle (2) comprend une zone de l'élément formant couvercle (2) qui est plus petite qu'une zone englobée par le point destiné à la rupture (10) entre le support (1) et l'élément de fermeture (3).

7. Dispositif selon l'une quelconque des revendications 1 à 6, **caractérisé en ce que** le dispositif comprend des moyens qui sont destinés à détruire l'élément formant couvercle et avec lesquels, lors de l'exercice de la force minimale, l'élément formant couvercle (2) peut être détruit.

8. Dispositif selon l'une quelconque des revendications précédentes, **caractérisé en ce que** le dispositif comporte des moyens (15, 16) destinés à la destruction de l'élément formant couvercle.

9. Dispositif selon l'une quelconque des revendications 1 à 8, **caractérisé en ce que** le point destiné à la rupture (10) entre l'élément de fermeture (3) et le support (1) englobe la zone de fixation du coulisseau à l'élément de fermeture (3) à l'exception d'une zone de charnière.

10. Dispositif selon la revendication 9, **caractérisé en ce que** la zone de charnière est la zone entre support (1) et élément de fermeture (3) qui a la distance au coulisseau la plus grande possible.

11. Dispositif selon la revendication 10, **caractérisé en ce que** le taquet d'arrêt au niveau de l'élément de fermeture est prévu à l'opposé de la zone de charnière.

12. Dispositif selon l'une quelconque des revendications précédentes, **caractérisé en ce que**, sur celui des côtés de l'élément de fermeture (3) qui est éloigné de la première partie de l'espace creux (4), le dispositif comprend un poinçon (14) dirigé vers l'élément de fermeture (3).

13. Dispositif selon l'une quelconque des revendications précédentes, **caractérisé en ce que** la première partie de l'espace creux (4) est réalisée cylindrique.

14. Dispositif selon l'une quelconque des revendications précédentes, **caractérisé en ce que** la première partie de l'espace creux (4) est réalisée tronconique.

15. Dispositif selon l'une quelconque des revendications précédentes, **caractérisé en ce que** la seconde partie (5a) de l'espace creux ou le second espace creux (5) comporte une ouverture d'extraction.

16. Dispositif selon la revendication 15, **caractérisé en ce que** l'ouverture d'extraction est prévue dans une paroi de la seconde partie (5a) de l'espace creux ou dans une paroi du second espace creux qui est directement adjacente au point destiné à la rupture (10) entre support (1) et élément de fermeture (3).

17. Dispositif selon la revendication 15 ou 16, **caractérisé en ce qu'**un canal (7) est branché en aval de l'ouverture d'extraction.

18. Dispositif selon l'une quelconque des revendications 13 à 17, **caractérisé en ce que** les moyens amplifiant la force capillaire sont prévus dans la seconde partie (5a) de l'espace creux ou dans le second espace creux (5) et/ou dans le canal (7).

19. Dispositif selon la revendication 18, **caractérisé en ce que** les moyens amplifiant la force capillaire sont formés par des éléments de microstructures tels que tranchées, stèles, colonnes ou autres et/ou par une couche de non-tissé.

20. Dispositif selon l'une quelconque des revendications 1 à 19, **caractérisé en ce qu'**un canal d'alimentation débouche dans la seconde partie (5a) de l'espace creux ou dans le second espace creux (5).

21. Dispositif selon l'une quelconque des revendications 1 à 20, **caractérisé en ce qu'**au moins une paroi de la seconde partie (5a) est en retrait au moins par endroits par rapport à au moins une paroi adjacente de la première partie (4a).

22. Procédé d'extraction d'un liquide stocké dans un dispositif selon l'une quelconque des revendications 1 à 21, **caractérisé par** les étapes suivantes :
- une force est exercée sur l'élément formant couvercle (2) ;
- les moyens destinés au transfert de la force transfèrent la force sur l'élément de fermeture (3) ;
- en raison de l'action de la force sur l'élément de fermeture (3), une liaison de matières entre l'élément de fermeture (3) et le support (1) est détruite ou l'élément de fermeture (3) est détruit ;
- après l'action de la force, une ouverture de libération est créée dans la zone de l'élément de fermeture (3) de telle sorte que la quantité de liquide peut être extraite de la première partie de l'espace creux (4).
